## Europäisches Patentamt

## European Patent Office

## Office européen des brevets

(19)

(11) Veröffentlichungsnummer: **0 000 960**
B1

(12) **EUROPÄISCHE PATENTSCHRIFT**

(45) Veröffentlichungstag der Patentschrift:
03.06.81

(21) Anmeldenummer: 78200007.9

(22) Anmeldetag: 01.06.78

(51) Int. Cl.³: **F 16 H 5/64,** F 16 H 5/66, **B 60 K 41/04**

(54) Vorrichtung zum Schalten von Stufengetrieben in Kraftfahrzeugen.

(30) Priorität: 29.08.77 DE 2738914

(43) Veröffentlichungstag der Anmeldung:
07.03.79 Patentblatt 79/5

(45) Bekanntmachung des Hinweises auf die Patenterteilung:
03.06.81 Patentblatt 81/22

(84) Benannte Vertragsstaaten:
CH DE FR GB NL SE

(56) Entgegenhaltungen:
DE-C-1 964 524
FR-A-1 397 316
FR-A-2 082 311

(73) Patentinhaber: ROBERT BOSCH GMBH, Postfach 50,
D-7000 Stuttgart 1 (DE)

(72) Erfinder: Eckert, Konrad, Dr., Günzelburgweg 29,
D-7000 Stuttgart 30 (DE)
Erfinder: Espenschied, Helmut, Turmstrasse 8,
D-7140 Ludwigsburg (DE)
Erfinder: Rothfuss, Georg, Haus Nr. 54,
D-8972 Sonthofen/Hüttenberg (DE)
Erfinder: Witte, Alexander, Dr., Gartenstrasse 91,
D-7016 Gerlingen (DE)

Vorrichtung zum Schalten von Stufengetrieben in Kraftfahrzeugen

Stand der Technik

Die Erfindung geht aus von einer Vorrichtung nach der Gattung des Hauptanspruchs. Eine derartige Vorrichtung ist beispielsweise in der DE-OS 19 64 524 beschrieben.

Bei Kraftfahrzeugen mit automatisch geschaltetem Stufengetriebe ist es üblich, die Hoch- bzw. Rückschaltpunkte des Stufengetriebes in Abhängigkeit von der Fahrzeuggeschwindigkeit und der Motorlast zu ermitteln. Die Fahrzeuggeschwindigkeit wird dabei in der Regel von der Getriebeausgangsdrehzahl abgeleitet, der Lastzustand des Motors aus der Stellung des Fahrpedales bzw. der Drosselklappe ermittelt.

Bei hydraulischen Getriebesteuervorrichtungen werden diese Grössen in Drücke umgesetzt, die ihrerseits mit Hilfe von hydraulischen Vergleichern Steuerschieber betätigen, die für das Einrücken bzw. Lösen von Kupplungen und Bremsbändern in den bei Automatikgetrieben üblicherweise verwendeten Planetengetrieben den Schaltdruck freigeben oder unterbrechen.

Bei elektronischen Getriebesteuerungen hingegen werden die Betriebsgrössen des Kraftfahrzeuges über Geber in elektrische Spannungen umgesetzt und diese Spannungen einer elektronischen Getriebesteuerschaltung zugeführt, in der beispielsweise Kippstufen zur Ansteuerung der die einzelnen Gänge einlegenden Magnetventile vorgesehen sind.

Den genannten Getriebesteuervorrichtungen ist gemein, dass die Umschaltbedingungen von einem Gang in den anderen in Abhängigkeit von Lastzustand und der Fahrzeuggeschwindigkeit in einem Last-Geschwindigkeits-Diagramm dargestellt werden können, in dem die Umschaltpunkte vorzugsweise als geneigte Gerade auftreten. Diese sogenannten Schaltmuster bzw. Schaltgeraden bestimmen die Betriebsweise des Automatikgetriebes und stellen gegebenenfalls auch das erzwungene Rückschalten mit Übergas (Kickdown) dar.

Befindet sich ein Kraftfahrzeug beispielsweise in einem Betriebspunkt im Last-Geschwindigkeits-Diagramm oberhalb einer Hochschaltgerade und wird die Last durch Zurücknahme des Fahrpedales verringert, schaltet das Automatikgetriebe in den durch die entsprechende Hochschaltgerade bestimmten nächsthöheren Gang. Auf diese Weise ist es dem Fahrer eines Kraftfahrzeuges mit Automatikgetriebe möglich, den höheren Gang zu «holen», andererseits kann ein derartiger Hochschaltvorgang jedoch auch störend sein, da nicht bei jeder Rücknahme des Fahrpedals ein Hochschalten erwünscht ist. Fährt das Kraftfahrzeug beispielsweise eine Gefällestrecke herunter oder fährt es in eine Kurve ein, nimmt der Fahrer zur Verminderung der Fahrzeuggeschwindigkeit in der Regel das Gas zurück. Bei Kraftfahrzeugen ohne Automatikgetriebe hat dies den zusätzlichen Vorteil, dass die Bremswirkung des Motors ausgenutzt werden kann. Bei Fahrzeugen mit Automatikgetriebe wird jedoch, wie oben beschrieben, hochgeschaltet und die Bremswirkung des Motors dadurch im Gegenteil verringert. Dieses Betriebsverhalten von Automatikgetrieben ist nicht nur störend, sondern kann in bestimmten Verkehrssituationen auch zu Gefährdungen führen. Weiterhin ist es bei Ausrollen eines Kraftfahrzeuges mit Automatikgetriebe störend, dass bei Zurücknahme des Fahrpedales das Getriebe zunächst in den höheren Gang schaltet, dann jedoch mit abnehmender Geschwindigkeit wieder in den niedrigeren Gang zurückschaltet. Dieses Betriebsverhalten mindert den Fahrkomfort und belastet durch überflüssige Schaltvorgänge unnötig das Automatikgetriebe.

Um die genannten Nachteile zu vermeiden, insbesondere um die Motorbremswirkung auf Gefällestrecken ausnutzen zu können, ist es bekannt, manuelle Umschaltvorrichtungen zur Veränderung des Schaltmusters des Automatikgetriebes vorzusehen oder das Automatikgetriebe so auszubilden, dass wahlweise auch von Hand geschaltet werden kann. In der DT-OS 1 954 783 ist beispielsweise ein elektronischer Regler für automatische Fahrzeugübersetzungsgetriebe beschrieben, bei dem der vom Fahrpedal bzw. der Drosselklappe betätigte Weggeber gestuft ausgebildet ist. Das durch die Stufung dieses Weggebers bestimmte Schaltmuster des Automatikgetriebes kann durch einen Schalter verändert werden, der wahlweise von Hand oder selbsttätig mit Hilfe eines vom Gradienten der Gefällestrecke abhängigen Signales betätigbar ist. In der DT-PS 1 430 613 ist eine Steuervorrichtung zum selbsttätigen Gangwechsel von Wechselgetrieben, insbesondere für Kraftfahrzeuge beschrieben, bei der vermittels einer hydraulischen Getriebesteuerung neben den üblichen Fahrbereichen P, R, N, D, L durch ein handbetätigtes Wählerventil der gerade eingelegte Gang verrastet werden kann.

Nachteil dieser beschriebenen Vorrichtungen ist, dass ein manueller Eingriff in den Betriebsablauf des Automatikgetriebes erforderlich ist, was dem Sinn eines Automatikgetriebes widerspricht.

Weiterhin ist aus der DT-AS 2 165 707 eine elektrohydraulische Steuervorrichtung für ein selbsttätig schaltbares Kraftfahrzeug-Wechselgetriebe bekannt, bei der ein am Fahrpedal befindlicher Schalter, der bei gelöstem Fahrpedal betätigt wird, das Schaltmuster des Automatikgetriebes in der Weise verändert, dass beispielsweise bei einem Dreiganggetriebe bei gelöstem Fahrpedal und hoher Geschwindigkeit der zweite Gang eingelegt wird. Diese Vorrichtung hat jedoch den Nachteil, dass dann zwangsweise in den zweiten Gang rückgeschaltet wird, wenn das Fahrzeug im dritten Gang fährt und das Fahrpedal gelöst wird. Auch die in der DT-OS 2 537 475 beschriebene Steuereinrichtung für automatisch geschaltete Kraftfahrzeug-Gangwechselgetriebe sieht einen vom Fahrpedal bzw. der Motorauspuffbremse betätigten Schalter vor, der bei Lösen des Fahrpedales betätigt wird und ein Hochschalten verhindert bzw. bei hoher Geschwindigkeit ein Rückschalten bewirkt. Nachteil dieser Vorrichtungen ist, dass ein erzwungenes Rückschalten bei hohen Geschwindigkeiten und Lösen des Fahrpedales den Fahrer überrascht und damit eine gefährliche Situation herbeiführen kann.

Aus der DE-OS 19 64 524 ist eine elektronische Steuervorrichtung für Getriebe mit abgestuften Übersetzungsverhältnissen bekannt, bei der eine Eingangsgrösse vom Fahrpedal einstellbar ist und bei der Schaltmittel zur Unterdrückung von Hochschaltbefehlen vorgesehen sind. Die bekannte Vorrichtung hat jedoch den Nachteil, das durch die Schaltmittel zunächst alle Hochschaltvorgänge für eine vorbestimmte Zeit unterdrückt werden und dass die Eingangsgrösse aus der Stellung des Fahrpedals und der Fahrgeschwindigkeit kombiniert wird. Dies hat einerseits den Nachteil, dass in bestimmten Fahrstiuationen die Hochschaltunterdrückung nach der vorbestimmten kurzen Zeit wieder aufgehoben wird, und dass andererseits zur Bildung des Unterdrückungssignals nicht ausschliesslich die Fahrpedalstellung herangezogen wird, so das das natürliche Fahrverhalten des Fahrers nicht ausreichend Berücksichtigung findet.

Schliesslich ist aus der FR-OS 20 82 311 noch eine elektronische Getriebesteuervorrichtung bekannt, die ebenfalls Mittel zur Unterdrückung von Hochschaltvorgängen aufweist. Diese Mittel haben jedoch den Nachteil, dass ihr Wirksamwerden an das Einlegen eines bestimmten Ganges und das gleichzeitige vollständige Lösen des Fahrpedals geknüpft ist.

Vorteile der Erfindung

Die erfindungsgemässe Vorrichtung mit den kennzeichnenden Merkmalen des Hauptanspruches hat demgegenüber den Vorteil, die natürliche Verhaltensweise eines Fahrers eines Kraftfahrzeuges bei Befahren einer Gefällestrecke, einer Kurve oder beim Ausrollen in den Regelkreis zur Gewinnung eines Kriteriums für das Unterdrücken von Hochschaltvorgängen mit einzubeziehen. Durch Berücksichtigung dieser ergonomischen Gesichtspunkte verhält sich das Fahrzeug mit Automatikgetriebe wie vom Fahrer beabsichtigt, da man davon ausgehen kann, dass der Fahrer bei den fraglichen Situationen (Gefälle, Kurve, Ausrollen) das Gas schnell, nicht jedoch unbedingt ganz wegnimmt. Dadurch wird der Fahrer nicht ihn überraschenden Rückschaltvorgängen ausgesetzt. Zudem ist kein dem Sinn eines Automatikgetriebes widersprechender manueller Eingriff in den Betriebsablauf der Getriebesteuerung erforderlich, der für den Fahrer eines Kraftfahrzeuges mit Automatikgetriebe unzumutbar und zeitraubend ist sowie plötzliche zusätzliche Konzentration erfordert.

Durch die Unterdrückung von unerwünschten Hochschaltvorgängen wird das Getriebe entlastet und damit seine Lebensdauer erhöht. Hinzu kommt, dass es bei Verwendung einer erfindungsgemässen Vorrichtung möglich ist, bei Befahren von Gefällestrecken oder engen Kurven die Motorbremskraft auszunutzen anstatt wie bei herkömmlichen Automatikgetrieben die Fussbremse zu betätigen. Damit wird auch der Verschleiss der Fussbremse herabgesetzt.

Die nachfolgend beschriebenen Ausführungsformen der erfindungsgemässen Vorrichtung sind so ausgelegt, dass sie zusätzlich zu bekannten Getriebesteuerungen verwendet werden können.

So kann bei der ersten Ausführungsform der erfindungsgemässen Vorrichtung eine übliche hydraulische Getriebesteuerung verwendet werden, wobei lediglich der Kolben des die Lastgrösse einstellenden Schieberventils modifiziert und ein Blockierventil für den Zufluss des Druckmittels zu dem Schieberventil vorgesehen werden muss, das von einem am Saugrohr anzubringenden Membran-Schnappschalter betätigt wird.

Bei der zweiten Ausführungsform der erfindungsgemässen Vorrichtung wird die von einem mit dem Fahrpedal gekoppelten Weggeber kommende, dem Lastzustand des Motors entsprechende Spannung über eine Sample-and-Hold-Stufe einer üblichen elektronischen Getriebesteuereinheit zugeführt, wobei die Unterdrückung der unerwünschten Hochschaltvorgänge durch Ansteuerung der Smaple-and-Hold-Stufe ausgelöst wird.

In der dritten Ausführungsform der erfindungsgemässen Vorrichtung wird die von einem Getriebeausgangsdrehzahl-Geber kommende und der Fahrzeuggeschwindigkeit entsprechende Spannung über eine steuerbare Begrenzerstufe einer elektronischen Getriebesteuereinheit zugeführt, auch ohne dass in diesem Falle Änderungen an der elektronischen Getriebesteuerung erforderlich wären.

In der vierten Ausführungsform der erfindungsgemässen Vorrichtung wird schliesslich die Ausführung von Hochschaltbefehlen dadurch verhindert, dass die die Hochschaltbefehle von der Getriebesteuereinheit an eine Getriebeschalteinheit führende Leitung unterbrochen wird, wobei die Kriterien für die Unterbrechung durch externe Beschaltung der Getriebesteuereinheit ermittelt werden. Es ist daher auch in diesem Falle keine Änderung der üblichen elektronischen Getriebesteuereinheit erforderlich.

Der Aufwand für das Vorsehen einer erfindungsgemässen Vorrichtung reduziert sich mithin bei der hydraulischen Ausführungsform auf einige wenige übliche hydraulische und pneumatische Bauelemente; bei den elektronischen Ausführungsformen der erfindungsgemässen Vorrichtung sind ebenfalls nur wenige elektronische Stufen erforderlich, die in üblicher Technik aufgebaut werden können und die ohnehin im Fahrzeug erfassten und als elektrische Spannungen vorliegenden Betriebsparameter des Kraftfahrzeuges auswerten. Damit ist der zusätzliche Aufwand für den Einbau einer erfindungsgemässen Vorrichtung verglichen mit dem Gesamtaufwand einer hydraulischen bzw. einer elektronischen Getriebesteuereinheit gering.

Zeichnung

Ein Schaltmuster sowie mehrere Ausführungsformen der erfindungsgemässen Vorrichtung sind in der Zeichnung dargestellt und in der nachfolgenden Beschreibung näher erläutert. Es zeigen: Fig. 1 ein Last-Geschwindigkeits-Diagramm mit den Schaltgeraden für ein Dreiganggetriebe; Fig. 2 ein Prinzipbild einer ersten Ausführungsform mit hydraulisch-pneumatischer Steuerung; Fig. 3 ein Blockschaltbild einer zweiten Ausführungsform für eine elektronische Getriebesteuerung; Fig. 4 das Blockschaltbild einer dritten Ausführungsform für eine elektronische Getriebesteuerung; Fig. 5 das Blockschaltbild einer vierten Ausführungsform für eine elektronische Getriebesteuerung.

Beschreibung der Erfindung

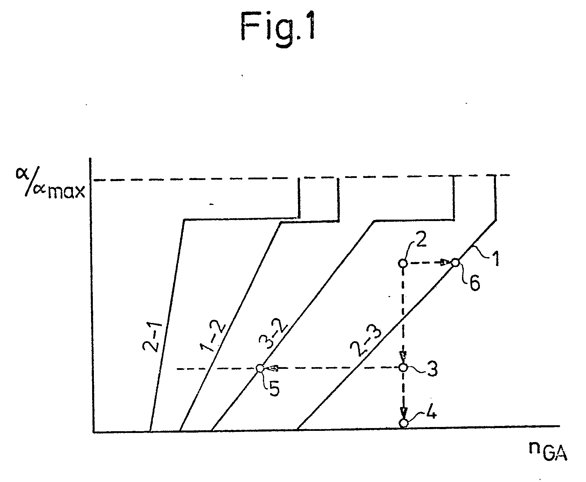

In Fig. 1 ist ein Last-Geschwindigkeits-Diagramm mit üblichen Schaltgeraden für ein Dreiganggetriebe dargestellt. Der Betriebszustand eines Kraftfahrzeuges wird dabei durch den jeweiligen Lastzustand des Motors, dargestellt durch die relative Öffnung der Drosselklappe $\alpha/\alpha_{max}$ und die Fahrzeuggeschwindigkeit, dargestellt durch die Getriebeausgangsdrehzahl $n_{GA}$ charakterisiert. Liegt ein derart definierter Betriebspunkt des Getriebes beispielsweise oberhalb einer Hochschaltgerade 1 für das Umschalten vom zweiten in den dritten Gang ist der zweite Gang eingelegt; liegt der Betriebspunkt unterhalb der Hochschaltgerade 1, wird in den dritten Gang hochgeschaltet. Dieser Schaltablauf ist in Fig. 1 durch den ersten Betriebspunkt 2 und den zweiten Betriebspunkt 3 dargestellt. Befindet sich das Fahrzeug mit eingelegtem zweiten Gang im ersten Betriebspunkt 2 und wird das Fahrpedal teilweise zurückgenommen, wird der zweite Betriebspunkt 3 erreicht, wobei bei Überschreiten der Hochschaltgeraden 1 in den dritten Gang hochgeschaltet wird. Wird das Fahrpedal dann ganz weggenommen, wird der dritte Betriebspunkt 4 erreicht. Andererseits ist es auch möglich, dass das Fahrzeug bei dem zweiten Betriebspunkt 3 mit entsprechend eingestellter Teillast an Geschwindigkeit abnimmt, bis es den vierten Betriebspunkt 5 erreicht, in dem in den zweiten Gang zurückgeschaltet wird. Bei den bekannten Getriebesteuerungen wird somit bei Zurücknahme des Fahrpedales aus dem ersten Betriebspunkt 2 zwangsläufig hochgeschaltet bzw. bei Erreichen des vierten Betriebspunktes 5 zwangsläufig in den zweiten Gang zurückgeschaltet. Aufgabe der vorliegenden Erfindung ist es demgegenüber, bei ruckartiger Zurücknahme des Fahrpedales von beispielsweise dem ersten Betriebspunkt 2 ein Hochschalten des Getriebes zu unterdrükken, wobei ein Erreichen des Lastwertes Null im dritten Betriebspunkt 4 allenfalls als zusätzliches Kriterium dient. Bei der ersten, zweiten und dritten Ausführungsform der Erfindung wird dies dadurch erreicht, dass bei ruckartiger Zurücknahme des Fahrpedales der bei der ruckartigen Zurücknahme eingenommene Lastwert als Eingangswert für die Getriebesteuerung verrastet wird. Bei der vierten Ausführungsform der erfindungsgemässen Vorrichtung wird die Unterdrückung des Hochschaltvorganges dadurch bewirkt, dass bei ruckartiger Zurücknahme des Fahrpedales die Weiterleitung des Hochschaltbefehles von der Getriebesteuereinheit an eine Getriebeschalteinheit unterbrochen wird.

Ein weiterer Betriebsfall kann dann auftreten, wenn sich das Fahrzeug auf einer steilen Gefällestrecke befindet und trotz Unterdrückung des Hochschaltvorganges bei ruckartiger Zurücknahme des Fahrpedales sich die Fahrzeuggeschwindigkeit erhöht, so dass in einem fünften Betriebspunkt 6 in den dritten Gang hochgeschaltet wird, weil in diesem Betriebspunkt aufgrund der Geschwindigkeiterhöhung die Hochschaltgerade 1 geschnitten wird. Bei der dritten Ausführungsform der Erfindung ist daher eine Begrenzung des Geschwindigkeitssignales nach oben hin auf den im Augenblick der ruckartigen Zurücknahme des Fahrpedales eingenommenen Wert vorgesehen, so dass aufgrund einer Geschwindigkeitserhöhung nicht hoch- aufgrund einer Geschwindigkeitsabnahme jedoch rückgeschaltet werden kann.

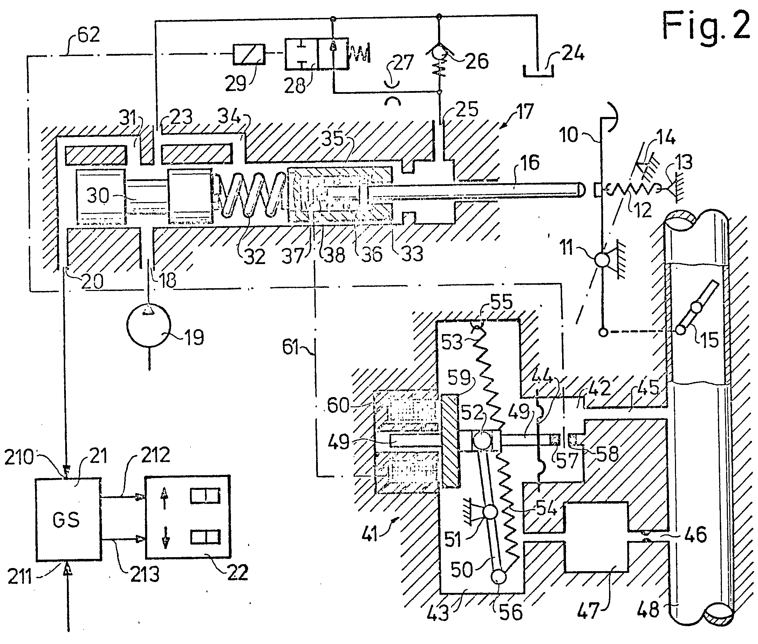

In Fig. 2 ist das Prinzipbild einer ersten Ausführungsform einer erfindungsgemässen Vorrichtung dargestellt. Ein Fahrpedal 10 eines Kraftfahrzeuges ist um ein raumfestes Gelenk 11 drehbar gelagert und wird in seiner Ruhestellung von einer Feder 12, die an einem raumfesten Befestigungspunkt 13 angelenkt ist, auf einem Auflagepunkt 14 gehalten. Das Fahrpedal 10 betätigt über ein hier nicht dargestelltes Gestänge, das durch eine gestrichelte Linie angedeutet ist, eine Drosselklappe 15 einer Brennkraftmaschine des Kraftfahrzeuges. Ausserdem ist mit dem Fahrpedal 10 ein Stössel 16 eines Schieberventils 17 auslenkbar. Das Schieberventil 17 weist einen Druckmittelzufluss 18 auf, der an eine Druckmittelpumpe 19 angeschlossen ist. Eine Druckmittelöffnung 20 des Schieberventils 17 ist zu einem Lasteingang 210 einer Getriebesteuereinheit mit Vergleicher 21 geführt, der weitere Betriebskenngrössen des Kraftfahrzeuges beispielsweise über einen Geschwindigkeitseingang 211 zugeführt werden. Die Getriebesteuereinheit 21 ist über eine Hochschaltleitung 212 und eine Rückschaltleitung 213 mit einer Getriebeschalteinheit 22 verbunden, die in Fig. 2 durch zwei Hydraulikschieber symbolisiert ist. Ein erster Druckmittelabfluss 23 des Schieberventils 17 steht über eine Leitung niedrigen Drucks mit einem Druckmittel-Vorratsgefäss 24 in Verbindung. Ein zweiter Druckmittelabfluss 25 des Schieberventils 17 ist über ein vorgespanntes Rückschlagventil 26 ebenfalls mit dem Druckmittel-Vorratsgefäss 24 sowie über eine Drossel 27 mit einem Wegeventil 28, das einen Schaltmagnet 29 aufweist, in dem in Fig. 2 dargestellten Ausführungsbeispiel einem 2/2-Wegeventil, verbunden. In dem Schieberventil 17 ist ein vom Stössel 16 betätigbarer Steuerschieber beweglich angeordnet. Ein erster Teil 30 des Steuerschiebes weist einen verjüngten Teil auf, durch den eine wechselseitige Verbindung zwischen dem Druckmittelzufluss 18 und dem ersten Druckmittelabfluss 23 einerseits sowie über einen Kanal 31 im Ventilgehäuse mit der Druckmittelöffnung 20 andererseits herstellbar ist. Der erste Teil 30 des Steuerschiebers ist über eine Schraubenfeder 32 mit einem zweiten Teil 33 des Steuerschiebers verbunden. Der von der Schraubenfeder 32 eingenommene Raum der Steuerschieberbohrung des Schieberventils 17 steht über einen Kanal 34 im Ventilgehäuse mit dem zweiten Druckmittelabfluss 23 in Verbindung. Der zweite Teil 33 des Steuerschiebers weist eine zentrische Bohrung auf, in der eine Schraubenfeder 35 angebracht ist, die auf der einen Seite auf der Grundfläche der Bohrung und auf der anderen Seite auf einem Bund 36 des Stössels 16 aufliegt, der in der zentrischen Bohrung des zweiten Teiles 33 des Steuerschiebers axial verschiebbar angeordnet ist. Auf dem Grund der zentrischen Bohrung im zweiten Teil 33 des Steuerschiebers ist ein Kontaktplättchen 37 befestigt, auf der gegenüberliegenden Stirnfläche des Stössels 16 ist ein Kontaktplättchen 38 isoliert angebracht.

Weiterhin ist ein Schnappschalter 41 vorgesehen, der eine erste Druckkammer 42 und eine zweite Druckkammer 43 aufweist, die durch eine Membran 44 voneinander getrennt sind. Die erste Druckkammer 42 ist über eine Verbindung 45, die zweite Druckkammer 43 ist über eine Drossel 46 und einen Hohlraum 47 mit einem Ansaugrohr 48 der Brennkraftmaschine des Kraftfahrzeuges verbunden. Die Membran 44 trägt einen Schaltstift 49, der vermittels eines Gestänges 50, das in einem raumfesten Gelenk 51 sowie in einem Gelenk 52 am Schaltstift 49 gelagert ist in zwei Raststellungen ausgerückt werden kann. Hierzu ist eine Feder 53, 54 an einem raumfesten Befestigungspunkt 55 und einem Gelenk 56 des Gestänges 50 befestigt. Der Schaltstift 49 trägt an seiner einen Stirnseite ein isoliert angebrachtes Kontaktplättchen 57, das einem am Gehäuse isoliert angebrachten Kontaktplättchen 58 gegenübersteht. In der einen Raststellung des Schnappschalters – im dargestellten Beispiel in der rechten Raststellung – sind die Kontaktplättchen 57, 58 miteinander verbunden; in der anderen Raststellung sind sie voneinander getrennt. Der Schaltstift 49 trägt weiterhin eine ferromagnetische Scheibe 59, die mit einem Schaltmagnet 60 in Wirkungsverbindung steht.

Durch Verbinden der Kontaktplättchen 37, 38 wird der Schaltmagnet 60 erregt, dies ist durch die strichpunktierte Linie 61 angedeutet; durch Verbinden der Kontaktplättchen 57, 58 wird der das Wegeventil 28 betätigende Schaltmagnet 29 erregt, dies ist durch die strichpunktierte Linie 62 angedeutet. Die Wirkungsweise der in Fig. 2 dargestellten Anordnung ist wie folgt:

Befindet sich das Fahrpedal 10 in der Ruhestellung, d.h. auf dem Auflagepunkt 14, auf dem es durch die Feder 12 festgehalten wird, wird keine Kraft vom Fahrpedal 10 auf den Stössel 16 des Steuerschiebers des Schieberventils 17 übertragen. Dann fliesst das Druckmittel von der Druckmittelpumpe 19 über den Druckmittelzufluss 18 in den zweiten Druckmittelabfluss 23 und von dort in das Druckmittel-Vorratsgefäss 24. Am ersten Druckmittelabfluss 23 und damit ebenso an der Druckmittelöffnung 20 herrscht der Druck Null, der der Nullaststellung des Fahrpedals 10 entspricht.

Wird nun das Fahrpedal 10 aus seiner Nullage ausgelenkt, wird eine Verbindung zwischen den Kontaktplättchen 37, 38 im zweiten Teil 3 des Steuerschiebers hergestellt. Dadurch wird der Schaltmagnet 60 des Schnappschalters 41 erregt und der Schaltstift 49 in seine linke Raststellung ausgerückt, wodurch der durch die Kontaktplättchen 57, 58 gebildete Schalter geöffnet wird. Dies wiederum bedeutet, dass der Schaltmagnet 29 des Wegeventils 28 nicht erregt ist, so dass das Wegeventil 28 seine Ruhelage einnimmt, in der es geöffnet ist. Ausserdem wird die vom Fahrpedal 10 auf dem Stössel 16 übertragene Kraft über die Schraubenfeder 32 auf den ersten Teil 30 des Steuerschiebers übertragen. Dies bedeutet, dass mit zunehmender Auslenkung des Fahrpedals 10 der erste Druckmittelabfluss 23 vom ersten Teil 30 des Steuerschiebers auch zunehmend verschlossen wird, so dass sich in der Steuerschieberbohrung des Schieberventils 17 ein Druck aufbaut, der über den Kanal 31 im Ventilgehäuse und die Druckmittelöffnung 20 auf den Lasteingang 210 der Getriebesteuereinheit 21 weitergeleitet wird. Auf diese Weise erscheint am Lasteingang 210 eine der Auslenkung des Fahrpedals 10 und damit der Motorlast entsprechende Druckgrösse.

Wird das Fahrpedal 10 nun langsam zurückgenommen, wird zwar der durch die Kontaktplättchen 37, 38 gebildete Schalter geöffnet und der Schaltmagnet 60 des Schnappschalters 41 fällt ab, der Schaltstift 49 verbleibt jedoch dennoch in seiner durch die Federn 53, 54 bestimmten linken Raststellung. Da zudem mit dem Fahrpedal 10 auch die Drosselklappe 15 langsam verstellt wird, entsteht im Ansaugrohr 48 nur ein langsam steigender Unterdruck, so dass sich in der ersten Druckkammer 42 über die Verbindung 45 und in der zweiten Druckkammer 43 über die Drossel 46 und den Hohlraum 47 derselbe Druck einstellt. Infolgedessen wird die Membran 44 nicht ausgelenkt. Da der durch die Kontaktplättchen 57, 58 gebildete Schalter weiterhin geöffnet ist, verharrt das Wegeventil 28 in seiner offenen Stellung und das Druckmittel aus der Schieberbohrung des Schieberventils 17 kann über den zweiten Druckmittelabfluss 25, die Drossel 27 und das Wegeventil 28 in das Druckmittel-Vorratsgefäss 24 abfliessen. Hierdurch ist eine Bewegung des Steuerschiebers des Schieberventils 17 nach rechts entsprechend der Zurücknahme des Fahrpedals 10 möglich. Dadurch wird die Verbindung zwischen dem Druckmittelzufluss 18 und dem ersten Druckmittelabfluss 23 wieder geöffnet und der Druck an der Druckmittelöffnung 20 und damit entsprechend am Lasteingang 210 der Getriebesteuereinheit 21 fällt – entsprechend der Stellung des Fahrpedals 10 – ab.

Ist jedoch das Fahrpedal 10 ausgelenkt und damit der Steuerschieber des Schieberventils 17 nach links ausgerückt und wird nun das Fahrpedal 10 ruckartig zurückgenommen, verschliesst die Drosselklappe 15 ebenso ruckartig das Ansaugrohr 48, wodurch sich ein schneller Unterdruckaufbau im Ansaugrohr 48 ausbildet. Über die Verbindung 45 entsteht hierdurch in der ersten Druckkammer 42 ein starker Unterdruck, während in der zweiten Druckkammer 43 der vorher herrschende Unterdruck noch bestehen bleibt, da sich der plötzliche Unterdruckaufbau im Ansaugrohr 48 über die Drossel 46 und den Hohlraum 47 nur verzögert auf die zweite Druckkammer 43 übertragen kann. Infolge der Druckdifferenz zwischen der ersten Druckkammer 42 und der zweiten Druckkammer 43 wird nun die Membran 44 nach rechts ausgelenkt, wodurch einerseits der Schnappschalter 41 infolge seiner durch das Gestänge 50 und die Feder 53, 54 gebildeten Anordnung in seine rechte Raststellung gebracht wird und andererseits in dieser Raststellung ein Kontakt zwischen den Kontaktplättchen 57, 58 hergestellt wird. Dies wiederum hat zur Folge, dass der Schaltmagnet 29 des Wegeventils 28 erregt wird, wodurch das Wegeventil 28 in seine sperrende Stellung gebracht wird. Das Druckmittel aus der Schieberbohrung des Schieberventils 17 kann nun nicht mehr über den dritten Druckmittelabfluss 25 abfliessen und der Steuerschieber verharrt in der vor der ruckartigen Wegnahme des Fahrpedals eingenommenen Stellung. Solange der Steuerschieber des Schieberventils 17 in seiner Lage blockiert ist, wird von der Druckmittelöffnung 20 an den Lasteingang 210 der Getriebesteuereinheit 21 eine konstante Eingangsgrösse weitergegeben. Dies bedeutet jedoch bei dem in Fig. 1 dargestellten Betriebsbeispiel, dass nicht die dem zweiten Betriebspunkt 3 sondern die dem ersten Betriebspunkt 1 entsprechende Lastgrösse als Eingangsgrösse der Getriebesteuereinheit 21 zugeführt wird und infogledessen ein Hochschaltvorgang, wie er bei üblichen Automatikgetrieben ausgeführt worden wäre, unterdrückt wird.

Erst wenn das Fahrpedal 10 wieder auf den vor der ruckartigen Rücknahme des Fahrpedals 10 eingenommenen Wert ausgelenkt und damit Kraft auf den Stössel 16 des Steuerschiebers des Schieberventils 17 übertragen wird, wird der durch die Kontaktplättchen 37, 38 gebildete Schalter geschlossen und infolgedessen der Schaltmagnet 60 des Schnappschalters 41 erregt. Dies hat zur Folge, dass die ferromagnetische Scheibe 59, die auf dem Schaltstift 49 angebracht ist, vom Magneten angezogen wird und der Schnappschalter 41 so wiederum in seine linke Raststellung ausgerückt wird. Damit wird jedoch auch der durch die Kontaktplättchen 57, 58 gebildete Schalter geöffnet und infolgedessen der Schaltmagnet 29 des Wegeventils 28 entregt. Das Druckmittel aus der Steuerschieberbohrung des Schieberventils 17 kann nun wiederum über den zweiten Druckmittelabfluss 25, die Drossel 27 und das Wegeventil 28 abfliessen. Damit kann sich auch der Steuerschieber des Schieberventils wieder nach rechts bewegen, wodurch, wie oben erklärt, eine Reduzierung der Eingangsgrösse am Lasteingang 210 der Getriebesteuereinheit 21 einhergeht.

Das vorgespannte Rückschlagventil 26 ist vorgesehen, um bei schneller Auslenkung des Fahrpedals 10 einen Druckmittelzufluss in die Steuerschieberbohrung des Schieberventils 17 vom Druckmittel-Vorratsgefäss 24 zu ermöglichen, andererseits aber einen Abfluss über diesen Zweig zu verhindern.

Die Drossel 27 hingegen bewirkt eine verzögerte Auslenkung des Steuerschiebers bei Rücknahme des Fahrpedals 10 und stellt so sicher, dass bei dem oben beschriebenen Schaltvorgang zur Unterdrückung von Hochschaltvorgängen die Stellung des Steuerschiebers verrastet wird, die zum Zeitpunkt der ruckartigen Rücknahme des Fahrpedals eingenommen wurde, da durch die Drossel 27 die Auslenkung des Steuerschiebers im Sinne einer Lastverminderung langsamer erfolgt, als der durch den Schnappschalter 41 und das Wegeventil 28 bewirkte Blockiervorgang des Druckmittelabflusses aus der Steuerschieberbohrung.

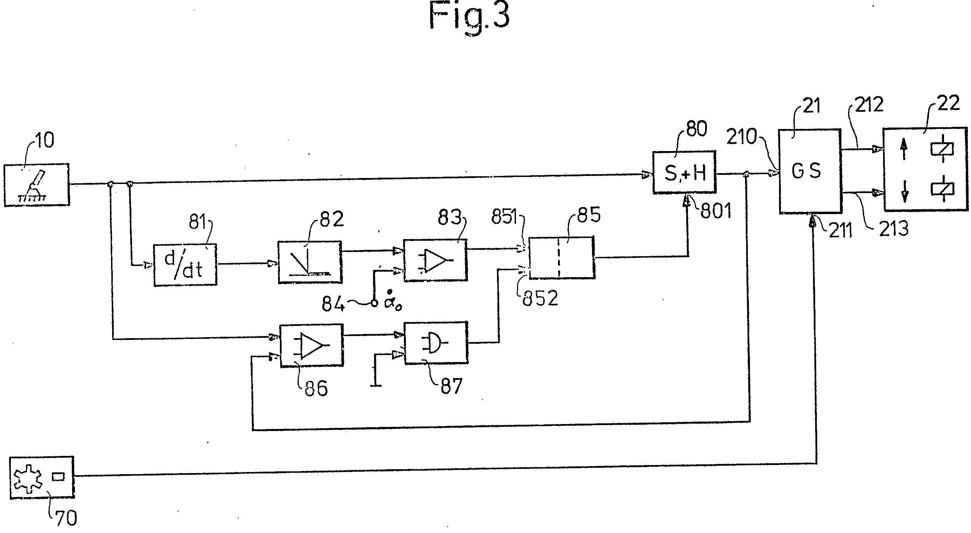

In Fig. 3 ist das Blockschaltbild einer zweiten Ausführungsform einer erfindungsgemässen Vorrichtung dargestellt. Das Fahrpedal 10 – in der Zeichnung der Einfachheit halber einschliesslich eines Weggebers – ist über eine erste Sample-and-Hold-Stufe 80 mit dem Lasteingang 210 der Getriebesteuereinheit 21 verbunden, die ihrerseits wiederum über die Hochschaltleitung 212 und eine Rückschaltleitung 213 an die Getriebeschalteinheit 22 angeschlossen ist. Der Getriebesteuereinheit 21 wird zudem über den Geschwindigkeitseingang 211 ein der Fahrzeuggeschwindigkeit entsprechendes Signal von einem Getriebeausgangsdrehzahl-Geber 70 zugeführt. Das der Fahrpedalstellung entsprechende Signal ist ausserdem über eine Differenzierstufe 81 und eine Kennlinienstufe 82 an den ersten Eingang eines ersten Komparators 83 gelegt, dessen zweiter Eingang von einer Klemme 84 mit einer weiteren Spannung beschaltbar ist. Der Ausgang des ersten Komparators 83 ist mit dem Setzeingang 851 eines Flip-Flops 85 verbunden, dessen Ausgang auf den Hold-Eingang der ersten Sample-and-Hold-Stufe 80 geführt ist. Das der Fahrpedalstellung entsprechende Signal wird schliesslich noch dem ersten Eingang eines zweiten Komparators 86 zugeführt, dessen zweiter Eingang mit dem Ausgang der ersten Sample-and-Hold-Stufe 80 verbunden ist. Der Ausgang des zweiten Komparators 86 ist auf einen Eingang einer ersten UND-Stufe 87 geführt, deren anderer Eingang an Masse liegt. Der Ausgang der ersten UND-Stufe 87 steuert schliesslich den Rücksetzeingang 852 des Flip-Flops 85.

Das vom Fahrpedal 10 herrührende und der Fahrpedalstellung entsprechende Signal wird über die erste Sample-and-Hold-Stufe 80 der Getriebesteuereinheit 21 zugeführt. Eine Sample-and-Hold-Stufe hat die Eigenschaft, das an ihrem Eingang anliegende Signal – gegebenenfalls um einen vorgebbaren Faktor verstärkt – an ihren Ausgang weiterzuleiten, solange der Hold-Eingang nicht angesteuert ist. In dieser Betriebsweise wirkt eine Sample-and-Hold-Stufe also als Verstärker. In dem Augenblick jedoch, in dem der Hold-Eingang angesteuert wird, bleibt das Ausgangssignal auf seinem Augenblickswert stehen, d.h., die Eingangsgrösse kann durch Ansteuerung des Hold-Einganges verrastet werden. Bei der in Fig. 3 dargestellten Ausführungsform einer erfindungsgemässen Vorrichtung wird der Hold-Eingang 801 der ersten Sample-and-Hold-Stufe 80 durch das Flip-Flop 85 angesteuert. Die Ausbildung der ersten Sample-and-Hold-Stufe 80 ist jedoch nicht Gegenstand dieser Erfindung. Sample-and-Hold-Stufen zur Verwendung in einer erfindungsgemässen Vorrichtung sind vielmehr handelsüblich und sind beispielsweise unter der Typenbezeichnung SHA-1A (Firma Analog Devices) erhältlich. Solange also der Hold-Eingang 801 der ersten Sample-and-Hold-Stufe 80 nicht angesteuert wird, gelangt das der Fahrpedalstellung entsprechende Signal dem jeweiligen Augenblickswert der Fahrpedalstellung entsprechend auf den Lasteingang 210 der Getriebesteuereinheit 21.

Um jedoch eine ruckartige Zurücknahme des Fahrpedals erkennen zu können, wird das der Fahrpedalstellung entsprechende Signal in der Differenzierstufe 81 differenziert und einer Kennlinienstufe 82 zugeführt. Die Kennlinienstufe 82 unterdrückt die positiven Ausgangssignale der Differenzierstufe 81 entsprechend einer positiven Auslenkung des Fahrpedales 10, so dass am Ausgang der Kennlinienstufe 82 ein Signal zur Verfügung steht, das der Geschwindigkeit der Zurücknahme des Fahrpedals 10 entspricht. Diese Spannung wird im ersten Komparator 83 mit einer an die Klemme 84 gelegten vorgebbaren Schwellwertspannung verglichen, so dass der erste Komparator 83 dann umschaltet, wenn die Geschwindigkeit der Rücknahme des Fahrpedals 10 den vorgegebenen Wert überschreitet. Auf diese Weise ist ein Mindestruck für die Rücknahme des Fahrpedals 10 definierbar, bei dem die erfindungsgemässe Vorrichtung ausgelöst wird. Der Ausgang des ersten Komparators 83 setzt nun das Flip-Flop 85, das seinerseits den Hold-Eingang 801 der ersten Sample-and-Hold-Stufe ansteuert. Auf diese Weise wird erreicht, dass bei definierter ruckartiger Zurücknahme des Fahrpedals 10 die zu diesem Zeitpunkt vorliegende, der Fahrpedalstellung entsprechende Spannung am Lasteingang 210 der Getriebesteuereinheit 21 verrastet wird.

Entsprechend der der Erfindung zugrundeliegenden Aufgabe soll diese Verrastung dann wieder gelöst werden, wenn das Fahrpedal 10 wieder auf seinen zum Zeitpunkt der ruckartigen Zurücknahme eingenommenen Wert ausgelenkt wurde. Zu diesem Zweck wird der am Ausgang der ersten Sample-and-Hold-Stufe 80 vorliegende verrastete Wert mit dem Augenblickswert der der Fahrpedalstellung entsprechenden Spannung im zweiten Komparator 86 verglichen. Bei Gleichheit der beiden Eingangsspannungen des zweiten Komparators 86 wird über die erste UND-Stufe 87 das Flip-Flop 85 zurückgesetzt und damit die erste Sample-and-Hold-Stufe 80 entriegelt. Von diesem Zeitpunkt an wird nun wieder, wie oben geschildert, der Getriebesteuereinheit 21 ein dem Augenblickswert der Fahrpedalstellung entsprechendes Signal zugeführt.

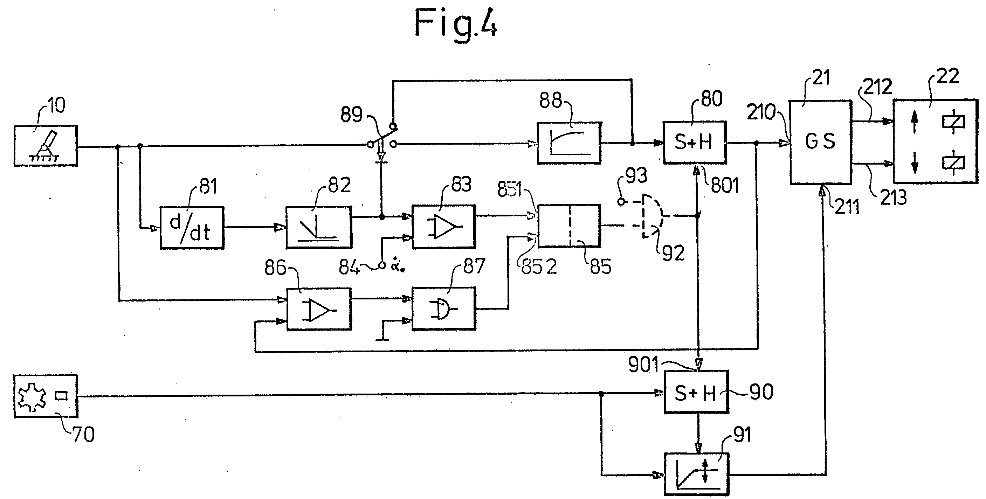

In Fig. 4 ist das Blockschaltbild einer dritten Ausführungsform einer erfindungsgemässen Vorrichtung dargestellt. Diese dritte Ausführungsform baut im wesentlichen auf der in Fig. 3 dargestellten Ausführungsform auf, entsprechend sind gleiche Elemente mit gleichen Bezugszeichen versehen und die weitere Beschreibung beschränkt sich auf die zusätzlich vorgesehenen Elemente. In die Verbindungsleitung zwischen dem Fahrpedal 10 und der ersten Sample-and-Hold-Stufe 80 ist ein erstes Verzögerungsglied 88 sowie ein Umschalter 89 geschaltet. Der Umschalter 89 bewirkt in seiner einen Schaltstellung die Einschaltung des Verzögerungsgliedes 88 in die Verbindungsleitung zwischen dem Fahrpedal 10 und der ersten Sample-and-Hold-Stufe 80, in seiner anderen Schaltstellung wird das Verzögerungsglied 88 überbrückt, so dass eine Schaltung, wie in Fig. 3 dargestellt, entsteht. Der Steuereingang des Umschalters 89 ist mit dem Ausgang der Kennlinienstufe 82 verbunden. Der Ausgang des Getriebeausgangsdrehzahl-Gebers 70 ist auf den Eingang einer zweiten Sample-and-Hold-Stufe 90 sowie über eine steuerbare Begrenzerstufe 91 auf den Geschwindigkeitseingang 211 der Getriebesteuereinheit 21 geführt. Der Ausgang der zweiten Sample-and-Hold-Stufe 90 ist mit dem Steuereingang der steuerbaren Begrenzerstufe 91 verbunden. Der Hold-Eingang 901 der zweiten Sample-and-Hold-Stufe 90 steht, ebenso wie der Hold-Eingang 801 der ersten Sample-and-Hold-Stufe 80 mit dem Ausgang des Flip-Flops 85 in Wirkungsverbindung. In einer weiteren Ausbildung der in Fig. 4 dargestellten Ausführungsform einer erfindungsgemässen Vorrichtung ist zwischen den Ausgang des Flip-Flops 85 und wenigstens einen Hold-Eingang 801, 901 eine zweite UND-Stufe 92 geschaltet, deren zweiter Eingang auf eine Klemme 93 geführt ist.

Die Wirkungsweise der in Fig. 4 dargestellten Ausführungsform einer erfindungsgemässen Vorrichtung weist gegenüber der in Fig. 3 dargestellten die folgenden Unterschiede auf:

Wie schon bei der in Fig. 2 dargestellten ersten Ausführungsform einer erfindungsgemässen Vorrichtung sind für die positive und die negative Auslenkung des Fahrpedales unterschiedliche Zeitkonstanten für die Weitergabe des der Fahrpedalstellung entsprechenden Signales auf die Getriebesteuereinheit 21 vorgesehen. Während es dem Fahrer eines Kraftfahrzeuges jederzeit möglich sein soll, ohne Verzögerung mit dem Fahrpedal Vollgas einzustellen, kann es zweckmässig sein, die Lastrücknahme verzögert an die Getriebesteuereinheit weiterzuleiten. Während dies bei der in Fig. 2 dargestellten Ausführungsform hydraulisch über die Drossel 27 bewirkt wird, ist bei der in Fig. 4 dargestellten Ausführungsform das erste Verzögerungsglied 88 vorgesehen, das bei Lastrücknahme in die Verbindung zwischen dem Fahrpedal 10 und der Getriebesteuereinheit 21 geschaltet wird. Ein Kriterium für Lastrücknahme liegt jedoch bereits am Ausgang der Kennlinienstufe 82 vor, da diese, wie oben erläutert, nur Signale abgibt, die einer negativen Auslenkungsgeschwindigkeit des Fahrpedales 10 entsprechen. Wird nun der Ausgang der Kennlinienstufe 82 mit dem Steuereingang des Umschalters 89 verbunden, gelangt bei positiver Auslenkung des Fahrpedals 10 die der Auslenkung entsprechende Spannung unverzögert auf die erste Sample-and-Hold-Stufe 80, bei Rücknahme des Fahrpedales 10 erscheint am Ausgang der Kennlinienstufe 82 eine Spannung, der Umschalter 89 wird umgelegt und die der Auslenkung des Fahrpedales entsprechende Spannung wird durch das erste Verzögerungsglied 88 verzögert auf die erste Sample-and-Hold-Stufe 80 geleitet.

Der Getriebeausgangsdrehzahl-Geber 70 ist bei der in Fig. 4 dargestellten Ausführungsform einer erfindungsgemässen Vorrichtung nicht mehr direkt, sondern über eine steuerbare Begrenzerstufe 91 mit dem Geschwindigkeitseingang 211 der Getriebesteuereinheit 21 verbunden. Die Begrenzungsschwelle der steuerbaren Begrenzerstufe 91 wird dabei über die zweite Sample-and-Hold-Stufe 90 – die im normalen Betrieb, wie erwähnt, als Verstärker arbeitet – von dem Ausgangssignal des Getriebeausgangsdrehzahl-Gebers 70 so eingestellt, dass sie gerade oberhalb des Augenblickswertes der Getriebeausgangsdrehzahl liegt. Auf diese Weise wird im normalen Betrieb des Kraftfahrzeuges, d.h. ohne ruckartige Zurücknahme des Fahrpedales und dadurch bewirkte Sperrung der zweiten Sample-and-Hold-Stufe 90, das die Getriebeausgangsdrehzahl entsprechende Signal unverzerrt und unbegrenzt auf den Geschwindigkeitseingang 211 der Getriebesteuereinheit 21 übertragen. Wird jedoch die zweite Sample-and-Hold-Stufe 90 in der beschriebenen Weise durch Setzen des Flip-Flops 85 und Ansteuerung des Hold-Einganges 901 gesperrt, bewirkt das zu diesem Zeitpunkt verriegelte Ausgangssignal der zweiten Sample-and-Hold-Stufe 90, dass die Begrenzungsschwelle der steuerbaren Begrenzerstufe 91 auf dem zu diesem Zeitpunkt vorliegenden Wert der Getriebeausgangsdrehzahl verrastet wird. Dementsprechend gelangen vom Getriebeausgangsdrehzahl-Geber 70 nur noch solche Geschwindigkeitsignale auf den Geschwindigkeitseingang 211 der Getriebesteuereinheit 21 die kleiner oder gleich dem verrasteten Wert der Getriebeausgangsdrehzahl sind. Betrachtet man hierzu das in Fig. 1 dargestellte Schaltmuster, so berücksichtigt die Verrastung des Geschwindigkeitsignales den Betriebsfall, bei dem das Kraftfahrzeug aus dem ersten Betriebspunkt 2 trotz zurückgenommenen Fahrpedales beispielsweise aufgrund einer steilen Gefällestrecke in den fünften Betriebspunkt 6 gelangt und dort dennoch in den höheren Gang hochschaltet. Während also die Verriegelung des Lastwertes am Eingang der Getriebesteuereinheit 21 den ersten Betriebspunkt 2 simuliert, während tatsächlich bereits beispielsweise der zweite Betriebspunkt 3 erreicht ist, simuliert die Geschwindigkeitsverriegelung den ersten Betriebspunkt 2, während tatsächlich bereits der fünfte Betriebspunkt 6 erreicht ist. Bei gleichzeitiger Verriegelung von Last- und Geschwindigkeitswert tritt entsprechend ein kombinierter Effekt auf. Um bei Verriegelung des Geschwindigkeitswertes ein Überdrehen der Brennkraftmaschine zu vermeiden, kann es zweckmässig sein, eine entsprechende Drehzahlbegrenzung zusätzlich vorzusehen.

Während bei der bisher beschriebenen Vorrichtung die Verriegelung des Last- und/oder Geschwindigkeitswertes allein durch eine ruckartige Zurücknahme des Fahrpedales 10 ausgelöst wurde, kann es in einigen Anwendungsfällen oder um ein sicheres Kriterium für die Verriegelung zu schaffen, zweckmässig sein, zusätzlich das Kriterium «gelöstes Fahrpedal» mit einzubeziehen. Dies ist bei der in Fig. 4 dargestellten Ausführungsform der erfindungsgemässen Vorrichtung durch die zweite UND-Stufe 92 berücksichtigt. Am Eingang der zweiten UND-Stufe 92 liegen das Ausgangssignal des Flip-Flops 85 sowie über eine Klemme 93 ein der Nullstellung des Fahrpedales entsprechendes Signal, das in hier nicht näher dargestellter Weise aus dem vom Fahrpedal 10 abgegebenen Signal gebildet werden kann. Die zweite UND-Stufe 92 bewirkt, dass der Last- und/oder Geschwindigkeitswert nur dann verriegelt wird, wenn das Fahrpedal ruckartig zurückgenommen wurde und dann die Nullstellung einnimmt.

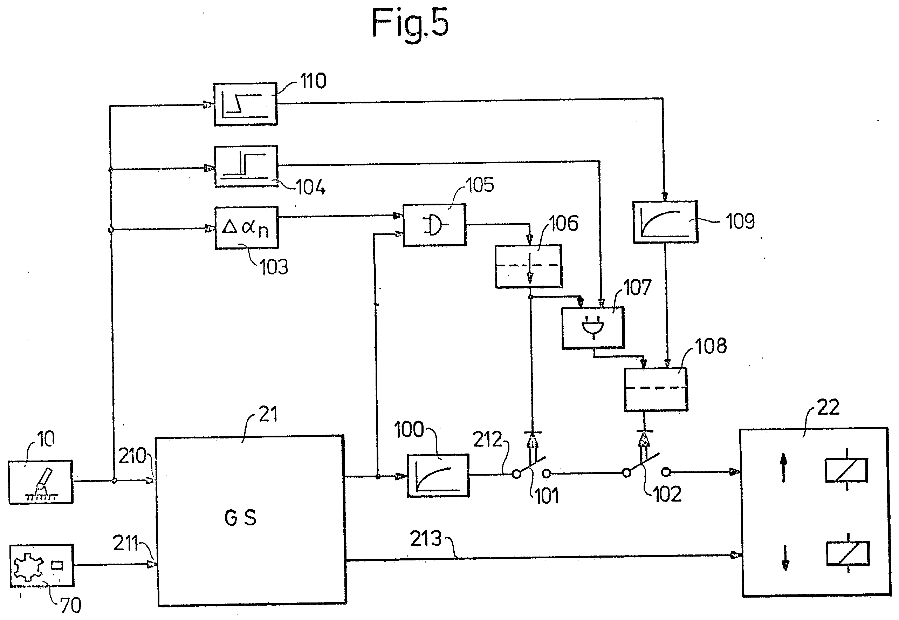

In Fig. 5 ist das Blockschaltbild einer vierten Ausführungsform einer erfindungsgemässen Vorrichtung dargestellt. Während die in Fig. 3 und 4 dargestellten Ausführungsformen vorzugsweise in analoger Schaltungstechnik aufgebaut sind, eignet sich die in Fig. 5 dargestellte Ausführungsform besonders zum Einsatz in Verbindung mit einer digitalen Getriebesteuervorrichtung, wie sie beispielsweise in der DT-OS 2 036 732 beschrieben ist. Die in Fig. 5 dargestellte Ausführungsform der erfindungsgemässen Vorrichtung weist ein zweites Verzögerungsglied 100 sowie Schalter 101, 102 auf, die in Reihe in die Hochschaltleitung 212 zwischen die Getriebesteuereinheit 21 und die Getriebeschalteinheit 22 geschaltet sind. Der Lasteingang 210 der Getriebesteuereinheit 21 ist mit einer Differenzstufe 103, einem Nulldetektor 104 sowie einer Schwellwertstufe 110 verbunden. Der Ausgang der Differenzstufe 103 ist an den ersten Eingang einer dritten UND-Stufe 105 angeschlossen, dessen zweiter Eingang an der Hochschaltleitung 212 liegt. Die dritte UND-Stufe 105 steuert eine monostabile Kippstufe 106, deren einer Ausgang mit dem Steuereingang des ersten Schalters 101 und deren zweiter Ausgang mit dem ersten Eingang einer vierten UND-Stufe 107 verbunden ist. Der zweite Eingang der vierten UND-Stufe 107 ist an den Ausgang des Nulldetektors 104 angeschlossen, während sein Ausgang mit dem Setzeingang eines Flip-Flops 108 verbunden ist. Der Rücksetzeingang des Flip-Flops 108 ist über ein drittes Verzögerungsglied 109 an den Ausgang der Schwellwertstufe 110 angeschlossen.

Die Differenzstufe 103 bildet in rascher Folge der Fahrpedalstellung entsprechende Werte und die Differenz aufeinanderfolgender Werte. Ist diese Differenz negativ, d.h. liegt eine Lastverminderung vor, wird die dritte UND-Stufe 105 angesteuert. Hat die Getriebesteuereinheit 21 gleichzeitig einen Hochschaltvorgang berechnet, wird über die dritte UND-Stufe 105 die monostabile Kippstufe 106 angestossen und der erste Schalter 101 für eine kurze Zeit, beispielsweise 500 ms geöffnet. Das zweite Verzögerungsglied 100 bewirkt dabei, dass der Hochschaltbefehl von der Getriebesteuereinheit 21 nicht zur Getriebeschalteinheit 22 gelangen kann, bevor die aus den Bausteinen 103, 105, 106 gebildete Logik ermitteln konnte, ob der Schalter 101 zu öffnen ist. Fällt die monostabile Kippstufe 106 nach dieser Zeit wieder in ihre stabile Ruhelage zurück, wird durch die vierte UND-Stufe 107 ein Kriterium dafür gebildet, ob nach Ablauf dieser Zeit die Fahrpedalstellung Null erreicht wurde. Ist dies der Fall, wird das Flip-Flop 108 gesetzt und der zweite Schalter 102 geöffnet. Dies bedeutet, dass bei einem in der Getriebesteuereinheit 21 berechneten Hochschaltvorgang und gleichzeitiger Lastverminderung der Hochschaltbefehl zunächst für eine kurze Zeit unterdrückt wird und nach Ablauf dieser Zeit geprüft wird, ob sich das Fahrpedal 10 in der Leerlaufstellung befindet. Ist dies der Fall, wird der Hochschaltbefehl endgültig unterdrückt und der Hochschaltvorgang damit nicht ausgeführt. Die von der Standzeit der monostabilen Kippstufe 106 bestimmte Prüfzeit ist dabei so einzustellen, dass ein Hochschaltvorgang nur dann unterdrückt wird, wenn das Fahrpedal 10 ruckartig zurückgenommen wird, d.h. wenn in der Prüfzeit die Leerlaufstellung des Fahrpedales 10 erreicht wird.

Das Flip-Flop 108 wird dann zurückgesetzt, wenn von der Schwellwertstufe 108 ein Signal über das dritte Verzögerungsglied 109 auf den Rücksetzeingang gelangt ist. Dies ist dann der Fall, wenn das Fahrpedal 10 wieder auf einen vorbestimmbaren Wert ausgelenkt wurde. Das dritte Verzögerungsglied 109 dient einerseits zur Unterdrückung von Störimpulsen, die Fehlrückschaltungen des Flip-Flops 108 verursachen könnten, andererseits bewirkt die Verzögerung, dass bei Auslenken des Fahrpedales 10 nicht doch noch hochgeschaltet wird. Liegt der in der Schwellwertstufe 110 eingestellte Schwellwert nämlich niedrig oder bei Null, würde bei direkter Ansteuerung des Rücksetzeinganges das Flip-Flop hochgeschaltet, wie aus dem in Fig. 1 dargestellten Last-Geschwindigkeits-Diagramm ersichtlich ist. Bei gelöstem Fahrpedal 10 und unterdrücktem Hochschalten (geöffneter zweiter Schalter 102) befindet sich das Kraftfahrzeug im dritten Betriebspunkt 4. Ist der Schwellwert der Schwellwertstufe 110 nun niedrig eingestellt, beispielsweise in Höhe des zweiten Betriebspunktes 2 oder liegt er bei Null, würde bei Überschreiten des Schwellwertes die Hochschaltleitung 212 durch Schliessen des zweiten Schalters 102 freigegeben und hochgeschaltet, da sich das Kraftfahrzeug in einem Betriebspunkt unterhalb der Hochschaltgerade 1 befindet. Wird das Ausgangssignal der Schwellwertstufe 110 jedoch verzögert, liegt der Betriebspunkt des Kraftfahrzeuges schon wieder oberhalb der Hochschaltgeraden 1, wenn der zweite Schalter 102 geschlossen wird. Durch Einschaltung des dritten Verzögerungsgliedes 109 ist es also möglich, mit dem Betriebspunkt aus dem unterhalb der Hochschaltgeraden 1 liegendem Bereich herauszukommen, ohne einen Hochschaltvorgang auszulösen.

**Ansprüche**

1. Vorrichtung zum Schalten von Stufengetrieben in Kraftfahrzeugen mit einer vom Fahrpedal (10) des Kraftfahrzeuges einstellbaren Eingangsgrösse für eine Getriebesteuereinheit (21) des Stufengetriebes und mit Schaltmitteln zur Unterdrückung von Hochschaltbefehlen, dadurch gekennzeichnet, dass die Schaltmittel so ausgebildet sind, dass sie bei Überschreiten einer vorgegebenen Zurücknahmegeschwindigkeit des Fahrpedals (10) ein Hochschalten des Stufengetriebes unterdrücken.

2. Vorrichtung nach Anspruch 1, dadurch gekennzeichnet, dass die Schaltmittel so ausgebildet sind, dass die vom Fahrpedal (10) eingestellte Eingangsgrösse auf ihren im Augenblick des Überschreitens der vorgegebenen Zurücknahmegeschwindigkeit des Fahrpedals (10) eingenommenen Augenblickswert verrastet wird.

3. Vorrichtung nach Anspruch 2, dadurch gekennzeichnet, dass die Schaltmittel so ausgebildet sind, dass die Verrastung der Eingangsgrösse wieder gelöst wird, wenn das Fahrpedal (10) wieder auf den der verrasteten Eingangsgrösse entsprechenden Wert ausgelenkt wird.

4. Vorrichtung nach einem der Ansprüche 1 bis 3, bei der in an sich bekannter Weise zur Einstellung der Eingangsgrösse ein Schieberventil (17) vorgesehen und die Eingangsgrösse der Druck eines hydraulischen Druckmittels ist, bei der ferner die Eingangsgrösse durch Verschieben eines ersten, einen verjüngten Abschnitt aufweisenden und die Verbindung zwischen einem Druckmittelzufluss (18) und einer Druckmittelöffnung (20) bemessenden Teiles (30) eines Steuerschiebers des Schieberventils (17) eingestellt wird und die Eingangsgrösse der Getriebesteuereinheit (21) zugeführt wird, dadurch gekennzeichnet, dass der Steuerschieber weiterhin einen mit dem ersten Teil (30) auf dessen der Druckmittelseite abgewandten Seite über eine Schraubenfeder (32) koaxial abgestützten zweiten Teil (33) aufweist, in dem zentrisch ein vom Fahrpedal (10) betätigbarer und dabei einen Arbeits-Tastkontakt (37, 38) schliessender Stössel (16) angeordnet ist, dass ein die Rückstellung des zweiten Teiles (33) des Steuerschiebers aus der ausgelenkten Position ermöglichender zweiter Druckmittelabfluss (25) über ein schaltbares Wegeventil (28) an ein druckloses Druckmittel-Vorratsgefäss (24) anschliessbar ist, dass das Wegeventil (28) von einem durch Überschreiten einer vorgegebenen Rücknahmegeschwindigkeit des Fahrpedals (10) auslenkbaren Schnappschalter (41) auslösbar ist und dass der Schnappschalter (41) durch den Arbeits-Tastkontakt (37, 38) rücksetzbar ist.

5. Vorrichtung nach Anspruch 4, dadurch gekennzeichnet, dass der Schnappschalter (41) als ein zwei durch eine Membran (44) voneinander getrennte Druckkammern (42, 43) aufweisender Membranschalter ausgebildet ist, dessen Membran (44) einen Schaltstift (49) trägt, der durch ein Gestänge (50) und eine Feder (53) in zwei stabilen Stellungen verrastbar ist, die ein Schliessen bzw. Öffnen eines Kontaktpaares (57, 58) bewirken, dass die erste Druckkammer (42) und die zweite Druckkammer (43) über eine Drossel (46) und einen Hohlraum (47) mit dem Ansaugrohr (48) einer Brennkraftmaschine des Kraftfahrzeuges verbunden ist, dass der Schaltstift (49) bei einem bestimmten Unterdruck in der ersten Druckkammer (42) gegenüber der zweiten Druckkammer (43) in die eine Raststellung ausgelenkt wird und durch einen Schaltmagneten (60) in die andere Raststellung umlenkbar ist.

6. Vorrichtung nach einem der Ansprüche 1 bis 3, dadurch gekennzeichnet, dass die Eingangsgrösse eine elektrische Spannung ist, die der Getriebesteuereinheit (21) über eine erste Sample-and-Hold-Stufe (80) zugeführt wird, dass eine der Stellung des Fahrpedals (10) entsprechende Spannung an die Sample-and-Hold-Stufe (80) und über eine Differenzierstufe (81) und eine Kennlinienstufe (82) an einen ersten Komparator (83) gelegt ist, der zudem mit einer festen vorgebbaren Vergleichspannung beaufschlagt ist und dass der Ausgang des ersten Komparators (83) mit dem Hold-Eingang (801) der Sample-and-Hold-Stufe (80) in Wirkungsverbindung steht.

7. Vorrichtung nach Anspruch 6, dadurch gekennzeichnet, dass der Hold-Eingang (801) der Sample-and-Hold-Stufe (80) vom Ausgang eines Flip-Flops (85) gesteuert wird, dessen Setzeingang (851) mit dem Ausgang des ersten Komparators (83) verbunden ist und dessen Rücksetzeingang (852) von einer Vergleichsschaltung (86, 87) gesteuert wird, die bei Gleichheit von Eingangsgrösse und der der Stellung des Fahrpedals (10) entsprechenden Spannung ein Signal abgibt.

8. Vorrichtung nach Anspruch 7, dadurch gekennzeichnet, dass die Vergleichsschaltung aus einem zweiten Komparator (86), dessen einer Eingang mit der der Stellung des Fahrpedals (10) entsprechenden Spannung und dessen anderer Eingang mit der der Ausgangsgrösse der Sample-and-Hold-Stufe (80) entsprechenden Eingangsgrösse beaufschlagt ist und dessen Ausgang mit einem Eingang einer ersten UND-Stufe (87) verbunden ist, deren anderer Eingang auf Nullpotential liegt, besteht.

9. Vorrichtung nach einem der Ansprüche 6 bis 8, dadurch gekennzeichnet, dass die der Stellung des Fahrpedals (10) entsprechende Spannung der ersten Sample-and-Hold-Stufe (80) über ein erstes Verzögerungsglied (8) zugeführt wird, das in Abhängigkeit von der Ausgangsspannung der Kennlinienstufe (82) überbrückbar ist.

10. Vorrichtung nach einem der Ansprüche 6 bis 9, bei der der Getriebesteuereinheit (21) ein der Fahrzeuggeschwindigkeit entsprechendes Signal zugeführt wird, dadurch gekennzeichnet, dass dieses Signal über eine steuerbare Begrenzerstufe (91) zugeführt wird, deren Begrenzerschwelle in Abhängigkeit von der der Fahrzeuggeschwindigkeit entsprechenden Spannung über eine zweite Sample-and-Hold-Stufe (90) steuerbar ist, deren Hold-Eingang (901) mit dem Ausgang des Flip-Flops (85) in Wirkungsverbindung steht, derart, dass die Begrenzerschwelle bei Abwesenheit eines Hold-Signals jeweils gerade oberhalb des Augenblickswertes der von der Fahrzeuggeschwindigkeit vorgegebenen Spannung liegt.

11. Vorrichtung nach einem der Ansprüche 6 bis 10, dadurch gekennzeichnet, dass zwischen dem Ausgang des Flip-Flops (85) und dem Hold-Eingang (801, 901) wenigstens einer Sample-and-Hold-Stufe (80, 90) eine zweite UND-Stufe (92) geschaltet ist, deren weiterer Eingang mit einem logischen Signal beschaltet wird, wenn die der Stellung des Fahrpedals (10) entsprechende Spannung auf einen vorbestimmten Wert abgesunken ist.

12. Vorrichtung nach Anspruch 1, dadurch gekennzeichnet, dass zur Unterdrückung des Hochschaltens eine Hochschaltleitung (212) von der Getriebesteuereinheit (21) zu einer Getriebeschalteinheit (2) bei Überschreiten einer vorgegebenen Rücknahmegeschwindigkeit des Fahrpedals (10) unterbrochen wird.

13. Vorrichtung nach Anspruch 12, dadurch gekennzeichnet, das Schaltmittel vorgesehen sind, die bei Berechnung eines Hochschaltvorganges durch die Getriebesteuereinheit (21) und Verminderung der der Stellung des Fahrpedals (10) entsprechenden Spannung die Hochschaltleitung (212) für eine vorbestimmte Zeit unterbrechen und die Unterbrechung der Hochschaltleitung (212) nach Ablauf der vorbestimmten Zeit fortsetzen, wenn die der Stellung des Fahrpedals (10) entsprechende Spannung zu diesem Zeitpunkt auf einen vorbestimmten Wert abgesunken ist.

14. Vorrichtung nach Anspruch 13, dadurch gekennzeichnet, das in einer mit der der Stellung des Fahrpedals (10) entsprechenden Spannung beaufschlagten Differenzstufe (103) die Differenzen aufeinanderfolgender Werte der Fahrpedalstellung gebildet werden und bei negativen Differenzen ein logisches Signal mit einem einen Hochschaltbefehl der Getriebesteuereinheit (21) entsprechenden Signal in einer dritten UND-Stufe (105) verknüpft wird, die eine monostabile Kippstufe (106) auslöst, durch die ein erster die Hochschaltleitung (212) unterbrechender Schalter (101) für eine vorbestimmte Zeit geöffnet wird, dass das dem Rückkippen der monostabilen Kippstufe (106) entsprechende logische Signal in einer vierten UND-Stufe (107) mit dem Ausgang eines mit der der Stellung des Fahrpedals (10) entsprechenden Spannung beaufschlagten Nulldetektors (104) verknüpft wird, dass der Ausgang der vierten UND-Stufe (107) ein Flip-Flop (108) setzt, durch dessen Ausgang ein zweiter, die Hochschaltleitung (212) unterbrechender und in Reihe zu dem ersten Schalter (101) liegender zweiter Schalter (102) gesteuert wird und dass der Rücksetzeingang des Flip-Flops (108) vorzugsweise über ein drittes Verzögerungsglied (109) mit einer Schwellwertstufe (110) verbunden ist, die eingangsseitig mit einer der Fahrpedalstellung entsprechenden Spannung beaufschlagt ist.

**Claims**

1. Apparatus for gear changing in change-speed drives for motor vehicles in which an input signal to a drive control unit (21) for the change-speed drive is adjustable by the accelerator pedal (10) of the motor vehicle, the apparatus comprising gear changing means for suppressing changing-up commands, characterised in that the gear changing means are so arranged that, on exceeding a predetermined speed of release of the accelerator pedal (10), they suppress changing-up of the change-speed drive.

2. Apparatus according to claim 1 characterised in that the gear changing means are so arranged that the input signal set by the accelerator pedal (10) is held at its instantaneous value received at the instant of exceeding the predetermined release speed of the accelerator pedal (10).

3. Apparatus according to claim 2 characterised in that the gear changing means are so arranged that the holding of the input signal is released once again when the accelerator pedal (10) is again displaced to the value corresponding to the held input signal.

4. Apparatus according to one of claims 1 to 3 in which a slide valve (17) is provided, in known manner, for adjusting the input signal and the input signal is the pressure of a hydraulic pressure medium, and in which the input signal is set by displacing a first portion of a valve member of the slide valve (17), having a reduced section and determining the communication between a pressure medium supply (18) and a pressure medium opening (20) and the input value is transmitted to the drive control unit (21), characterised in that, the valve member also has a second portion (33) in which is arranged centrally a tappet (16) actuable by the accelerator pedal (10) and thereby closing a working sensing contact (37, 38), the second portion (33) being supported coaxially by the first portion (30) through a helical spring (32) on its end remote from the pressure medium side, that a second pressure medium discharge (25) permitting the return of the second portion (33) of the valve member out of the displaced position can be connected through a switchable multiway valve (28) to a pressureless pressure medium storage tank (24), that the multiway valve (28) can be released by a snap switch (41) displaceable by exceeding a predetermined release speed of the accelerator pedal (10) and that the snap switch (41) can be re-set by the working sensing contact (37, 38).

5. Apparatus according to claim 4 characterised in that the snap switch (41) is formed as a diaphragm switch having two pressure chambers (42, 43) separated from one another by a diaphragm (44) which carries a switching pin (49) which can be held by a linkage (50) and a spring (53) in two stable positions which either effect the closing or the opening of a pair of contacts (57, 58), that the first pressure chamber (42) is connected to the inlet manifold (48) of a combustion engine on the motor vehicle and the second pressure chamber (43) is connected through a throttle (46) and a cavity (47) to the inlet manifold (48) of the combustion engine of the motor vehicle, that, at a predetermined negative pressure in the first pressure chamber (42) with respect to the second pressure chamber (43), the switching pin (49) is displaced into one rest position and can be reversed by a switching magnet (60) into the other rest position.

6. Apparatus according to one of claims 1 to 3 characterised in that the input signal is an electrical voltage which is transmitted to the drive control unit (21) through a first sample-and-hold stage (80), that a voltage corresponding to the position of the accelerator pedal (10) is applied to the sample-and-hold stage (80) and is applied through a differentiating stage (81) and a characteristic curve stage (82) to a first comparator (83) which is also influenced by a fixed predeterminable reference voltage and the output from the first comparator (83) is in operative communication with the hold input (801) of the sample-and-hold stage (80).

7. Apparatus according to claim 6 characterised in that the hold input (801) to the sample-and-hold stage (80) is controlled by the output from a flip-flop (85) the setting input (851) of which is connected to the output from the first comparator (83) and the resetting input (852) of which is controlled by a comparison circuit (86, 87) which delivers a signal when the input signal and the voltage corresponding to the position of the accelerator pedal (10) are the same.

8. Apparatus according to claim 7 characterised in that the comparison circuit consists of a second comparator (86) one input to which is influenced by the voltage corresponding to the position of the accelerator pedal (10) and the other input to which is influenced by the input signal corresponding to the output signal from the sample-and-hold stage (80) and the output from which is connected to an input to a first AND stage (87) the other input to which is at zero potential.

9. Apparatus according to one of claims 6 to 8 characterised in that the voltage corresponding to the position of the accelerator pedal (10) is transmitted to the first sample-and-hold stage (80) through a first delay element (88) which can be shunted depending on the output voltage from the characteristic curve stage (82).

10. Apparatus according to one of claims 6 to 9 in which a signal corresponding to the vehicle speed is transmitted to the drive control unit (21), characterised in that, the said signal is transmitted through a controllable limiter stage (91) the limiting threshold of which is controllable in accordance with the voltage corresponding to the vehicle speed through a second sample-and-hold stage (90) the hold input (901) to which is in operative communication with the output from the flip-flop (85) in such a manner that, in the absence of a hold signal, the limiting threshold lies just above the instantaneous value of the voltage provided by the vehicle speed.

11. Apparatus according to one of claims 6 to 10 characterised in that a second AND stage (92) is connected between the output from the flip-flop (85) and the hold input (801, 901) to at least one sample-and-hold stage (80, 90) the further input to the AND stage being connected to a logic signal when the voltage corresponding to the position of the accelerator pedal (10) has dropped to a predetermined value.

12. Apparatus according to claim 1 characterised in that, for the suppression of changing-up, a changing-up line (212) from the drive control unit (21) to a gear changing unit (22) is interrupted when a predetermined release speed of the accelerator pedal (10) is exceeded.

13. Apparatus according to claim 12 characterised in that gear changing means are provided which, on calculation of a changing-up operation by the drive control unit (21) and reduction in the voltage corresponding to the position of the accelerator pedal (10), interrupt the changing-up line (212) for a predetermined period of time and continue the interruption of the changing-up line (212) after the predetermined period of time has elapsed if the voltage corresponding to the position of the accelerator pedal (10) has dropped to a predetermined value at that instant in time.

14. Apparatus according to claim 13 characterised in that the differences between successive values of the accelerator pedal position are formed in a differential stage (103) influenced by the voltage corresponding to the position of the accelerator pedal (10) and with negative differences a logic signal is gated with a signal corresponding to a changing-up command in the gear control unit (21) in a third AND stage (105) which releases a monostable tilt stage (106) through which a first switch (101) interrupting the changing-up line (212) is opened for a predetermined period of time, that the logic signal corrsponding to the tilting back of the monostable tilt stage (106) is gated in a fourth AND stage (107) with the output from a zero detector (104) influencing the voltage corresponding to the position of the accelerator pedal (10), that the output from the fourth AND stage (107) sets a flip-flop (108) through the output from which a second switch (102) interrupting the changing-up line (212) and arranged in series with the first switch (101) is controlled and that the resetting input to the flip-flop (108) is connected, preferably through a third delay element (109), to a threshold value stage (110) which is influenced on its input side by a voltage corresponding to the accelerator pedal position.

**Revendications**

1. Installation pour commander des boîtes de vitesses à étages dans les véhicules automobiles avec une grandeur d'entrée, réglable à partir de la pédale d'accélérateur (10) du véhicule automobile, pour une unité de commande (21) de la boîte de vitesses à étages et avec des moyens de manœuvre pour annuler des ordres de manœuvre ascendante, caractérisée en ce que les moyens de manœuvre sont agencés de façon à annuler une manœuvre ascendante de la boîte de vitesses à étages lors du dépassement d'une vitesse de recul prédéterminée de la pédale d'accélérateur (10).

2. Installation selon la revendication 1, caractérisée en ce que les moyens de manœuvre sont agencés de façon que la grandeur d'entrée réglée à partir de la pédale d'accélérateur (10) soit verrouillée à sa valeur instantanée prise à l'instant du dépassement de la vitesse de recul prédéterminée de la pédale d'accélérateur (10).

3. Installation selon la revendication 2, caractérisée en ce que les moyens de manœuvre sont agencés de façon que le verrouillage de la grandeur d'entrée soit libéré lorsque la pédale d'accélérateur (10) est actionnée à nouveau sur la valeur correspondant à la grandeur d'entrée verrouillée.

4. Installation selon l'une quelconque des revendications 1 à 3, dans laquelle une soupape à tiroir (17) est prévue de façon en soi connue pour régler la grandeur d'entrée, la grandeur d'entrée étant la pression d'un liquide de pression hydraulique, dans laquelle en outre la grandeur d'entrée est réglée en déplaçant un premier élément (30) d'un tiroir de distribution de la soupape à tiroir (17), cet élément présentant une partie réduite et déterminant la liaison entre une arrivée de liquide de pression (18) et un orifice de liquide de pression (20), la grandeur d'entrée étant envoyée à l'unité de commande de boîte de vitesses (21), caractérisée en ce que le tiroir de distribution comporte en outre un second élément (33) s'appuyant coaxialement sur le premier élément (30), du côté situé à l'opposé du liquide de pression, par l'intermédiaire d'un ressort hélico*ïdal (32), second élément dans lequel est disposé coaxialement un poussoir (16) pouvant être actionné par la pédale d'accélérateur (10) et fermant alors un contact de travail (37, 38), en ce qu'un second écoulement de liquide de pression (25), permettant le retour du second élément (33) du tiroir de distribution à partir de la position déplacée, peut être raccordé à un récipient de stockage (24) sans pression de liquide de pression par l'intermédiaire d'une soupape à plusieurs voies commandée (28), en ce que la soupape à plusieurs voies (38) peut être déclenchée par un contacteur instantané (41) actionné par le dépassement d'une vitesse de recul prédéterminée de la pédale d'accélérateur (10) et en ce que le contacteur instantané (41) est rappelé par l'intermédiaire du contact de travail (37, 38).

5. Installation selon la revendication 4, caractérisée en ce que le contacteur instantané (41) est agencé sous forme de contacteur à membrane comportant deux chambres de pression (42, 43) séparées l'une de l'autre par une membrane (44), la membrane (44) portant une tige de commutation (49) pouvant être enclenchée dans deux positions stables au moyen d'une tringle (50) et d'un ressort (53), provoquant la fermeture et l'ouverture d'un couple de contacts (57, 58), en ce que la première chambre de pression (42) et la seconde chambre de pression (43) sont reliées à la tubulure d'admission (48) d'un moteur à combustion interne, la liaison ayant lieu par l'intermédiaire d'un étranglement (46) et d'une cavité (47) pour la seconde chambre, en ce que la tige de commutation (49) est déplacée dans l'une des positions d'enclenchement pour une dépression déterminée dans la première chambre de pression (42) par rapport à la seconde chambre de pression (42) et peut être déplacée dans l'autre position d'enclenchement par un électro-aimant (60).

6. Installation selon l'une des revendications 1 à 3, caractérisée en ce que la grandeur d'entrée est une tension électrique envoyée à l'unité de commande de boîte de vitesses (21) par l'intermédiaire d'un premier étage d'échantillonnage (80), en ce qu'une tension correspondant à la position de la pédale d'accélérateur (10) est appliquée à l'étage d'échantillonnage (80), et par l'intermédiaire d'un étage de différentiation (81) et d'un étage de caractéristiques (82), à un premier comparateur (83) sollicité en outre par une tension de comparaison fixe prédéterminée et en ce que la sortie du premier comparateur (83) est en liaison de fonctionnement avec l'entrée de retenue (801) de l'étage d'échantillonnage (80).

7. Installation selon la revendication 6, caractérisée en ce que l'entrée de retenue (801) de l'étage d'échantillonnage (80) est commandée par la sortie d'une bascule (85) dont l'entrée de commande (851) est reliée à la sortie du premier comparateur (83) et dont l'entrée de rappel (852) est commandée par un montage comparateur (86, 87) fournissant un signal en cas d'égalité de la grandeur d'entrée et de la tension correspondant à la position de la pédale d'accélérateur (10).

8. Installation selon la revendication 7, caractérisée en ce que le montage comparateur est constitué par un second comparateur (86) dont l'une des entrées est sollicitée par la tension correspondant à la position de la pédale d'accélérateur (10) et dont l'autre entrée est sollicitée par la grandeur d'entrée correspondant à la grandeur de sortie de l'étage d'échantillonnage (80), la sortie de ce second comparateur étant reliée à une entrée d'un premier étage ET 87 dont l'autre entrée est au potentiel zéro.

9. Installation selon l'une des revendications 6 à 8, caractérisée en ce que la tension correspondant à la position de la pédale d'accélérateur (10) est envoyée au premier étage d'échantillonnage (80) par l'intermédiaire d'un premier organe de temporisation (88) pouvant être shunté en fonction de la tension de sortie de l'étage de caractéristiques (82).

10. Installation selon l'une des revendications 6 à 9, dans laquelle un signal correspondant à la vitesse du véhicule est envoyé à l'unité de commande de boîte de vitesses (21), caractérisée en ce que ce signal est envoyé par l'intermédiaire d'un étage limiteur commandé (91) dont le seuil de limitation peut être commandé en fonction de la tension correspondant à la vitesse du véhicule par l'intermédiaire d'un second étage d'échantillonnage (90) dont l'entrée de retenue (901) est en liaison de fonctionnement avec la sortie de la bascule (85), de telle sorte qu'en l'absence d'un signal de retenue, le seuil de limitation est juste au-dessus de la valeur instantanée de la tension prédéterminée, par la vitesse du véhicule.

11. Installation selon l'une des revendications 6 à 10, caractérisée en ce qu'un second étage ET (92) est branché entre la sortie de la bascule (85) et l'entrée de retenue (801, 901) d'au moins un étage d'échantillonnage (80, 90), l'autre entrée de ce second étage ET étant branchée sur un signal logique lorsque la tension correspondant à la pédale d'accélérateur (10) s'abaisse à une valeur prédéterminée.

12. Installation selon la revendication 1, caractérisée en ce que pour annuler la manœuvre ascendante, une ligne de manœuvre ascendante (212) allant de l'unité de commande de boîte de vitesses (21) à une unité de manœuvre de boîte de vitesses (22) est coupée lors du dépassement d'une vitesse de recul prédéterminée de la pédale d'accélérateur (10).

13. Installation selon la revendication 12, caractérisée en ce qu'il est prévu des moyens de commutation qui, en cas de calcul d'une opération de manœuvre ascendante par l'unité de commande de boîte de vitesses (21) et réduction de la tension correspondant à la position de la pédale d'accélérateur (10), coupent la ligne de manœuvre ascendante (212) pendant un temps prédéterminé et prolongeant la coupure de la ligne de manœuvre ascendante (212) après écoulement du temps prédéterminé si la tension correspondant à la position de la pédale d'accélérateur (10) s'est abaissée à cet instant à une valeur prédéterminée.

14. Installation selon la revendication 13, dans un étage de différence (103) sollicité par la tension correspondant à la position de la pédale d'accélérateur (10), on forme les différentes valeurs successives de la position de la pédale d'accélérateur et, en cas de différences négatives, un

ordre de manœuvre ascendante de l'unité de commande de boîte de vitesses (21), cet étage ET déclenchant un étage basculant monostable (106) par lequel un premier contacteur (101) coupant la ligne de manœuvre ascendante (212) est ouvert pendant un temps prédéterminé, en ce que le signal logique correspondant au basculement de retour de l'étage basculant monostable (106) est combiné dans un quatrième étage ET (107) avec la sortie d'un détecteur de zéro (104) sollicité par la tension correspondant à la position de la pédale d'accélérateur (10), en ce que la sortie du quatrième étage ET (107) commande une bascule (108) dont la sortie commande un second contacteur (102) coupant la ligne de manœuvre ascendante (212) et branché en série avec le premier contacteur (101), et en ce que l'entrée de rappel de la bascule (108) est reliée, de préférence par l'intermédiaire d'un troisième organe de temporisation (109), à un étage à valeur de seuil (110) qui est sollicité, côté entrée, par une tension correspondant à la position de la pédale d'accélérateur.

# Fig.1

Fig.2

096 600 0

# Fig.3

# Fig.4

# Fig.5